**Europäisches Patentamt**

**European Patent Office**

**Office européen des brevets**

(19)

(11) Numéro de publication: **0 224 415**
**A1**

(12) **DEMANDE DE BREVET EUROPEEN**

(21) Numéro de dépôt: **86402516.8**

(22) Date de dépôt: **12.11.86**

(51) Int. Cl.⁴: **B 60 Q 1/30**

(30) Priorité: **14.11.85 FR 8516864**

(43) Date de publication de la demande:
**03.06.87 Bulletin 87/23**

(84) Etats contractants désignés:
**DE ES**

(71) Demandeur: **CIBIE PROJECTEURS**
**17, rue Henri Gautier**
**F-93012 Bobigny Cédex(FR)**

(72) Inventeur: **Dilouya, Gilbert**
**8, quai de la Marne**
**F-75019 Paris(FR)**

(74) Mandataire: **Martin, Jean-Jacques et al,**
**Cabinet REGIMBEAU 26, Avenue Kléber**
**F-75116 Paris(FR)**

(54) **Glace de fermeture à fonction catadioptrique pour feux de signalisation de véhicule automobile.**

(57) L'invention concerne les catadioptres pour véhicules automobiles, et en particulier une glace de fermeture (10) ou analogue pour au moins un feu de signalisation de véhicule, du type comportant une première région (16) destinée à remplir une fonction de rétro-réflexion catadioptrique, et une seconde région (16') destinée à ne pas remplir ladite fonction. Selon l'invention, la glace comporte dans la première région un ensemble de premières aiguilles formant prismes à réflexion totale, définissant chacune un trièdre trirectangle, pour définir ladite fonction de rétro-réflexion catadioptrique, et comporte dans la seconde région (16') un ensemble de secondes aiguilles (20'), définissant chacune un trièdre dont les faces définissent deux à deux un angle voisin de 90 degrés, et différent de 90 degrés entre au moins deux desdites faces, de manière à ne pas remplir ladite fonction catadioptrique, tout en présentant, en lumière diffuse, un aspect général similaire à celui des premières aiguilles.

FIG. 1

EP 0 224 415 A1

## GLACE DE FERMETURE A FONCTION CATADIOPTRIQUE POUR FEUX DE SIGNALISATION DE VEHICULE AUTOMOBILE

La présente invention concerne d'une façon générale les réflecteurs catadioptriques pour véhicules automobiles.

Il est bien connu dans la technique d'assurer la fonction catadioptrique telle qu'exigée par certains règlements à l'arrière des véhicules automobiles en aménageant des éléments catadioptriques sur la glace ou globe de fermeture d'un ou plusieurs feux de signalisation arrière dudit véhicule.

Cette fonction catadioptrique est réalisée, suivant la technique antérieure, en prévoyant à la surface intérieure de la glace de fermeture un certain nombre d'aiguilles catadioptriques, organisées par exemple en bandes parallèles s'étendant sur toute la largeur de la glace. Chaque aiguille ou élément catadioptrique est constitué d'un trièdre trirectangle, c'est-à-dire qu'il comporte trois facettes orthogonales deux à deux. Les fonctions lumineuses des feux associés à la glace restent aptes à traverser cette dernière par des régions transparentes situées entre les bandes catadioptriques.

Par ailleurs, il est bien connu aujourd'hui de fermer l'ensemble des feux de signalisation arrière situés d'un même côté du véhicule par une glace de fermeture unique, qui prend ainsi des dimensions relativement importantes. Or, certains règlements imposent que le catadioptre arrière soit inscrit dans une zone géométrique donnée, telle qu'un cercle de 200 mm de diamètre, dont la surface est généralement sensiblement plus petite que la surface totale de la glace de fermeture. La technique la plus simple consiste alors à disposer les aiguilles catadioptriques dans la zone géométrique imposée et en laissant transparent le reste de la surface de la glace de fermeture.

Une telle solution est cependant désavantageuse en ce que l'aspect général de la glace de fermeture présente une discontinuité nettement perceptible entre la zone catadioptrique et la zone transparente, ce que l'on ne souhaite pas en particulier pour des raisons liées à l'esthétique.

A cet égard, on cherche plutôt aujourd'hui à concevoir les glaces de fermeture des blocs de feux de telle sorte qu'elles présentent globalement un aspect relativement homogène pour un observateur extérieur en éclairage ambiant.

Pour satisfaire à cette exigence, il est également connu dans la technique antérieure de prévoir des aiguilles catadioptriques conventionnelles (trièdres trirectangles) selon des bandes ou autres figures géométriques s'étendant par exemple sur toute la largeur de la glace de fermeture, et d'effectuer un traitement de granitage ou de dépolissage des faces des éléments catadioptriques situés en dehors de la zone géométrique maximale imposée, pour rendre ces faces non réfléchissantes. Ce procédé est cependant long et coûteux. De plus, le granitage ou le dépolissage donnent aux aiguilles soumises à ce traitement un aspect extérieur, en éclairage ordinaire, qui reste assez différent de celui des aiguilles catadioptriques situées à l'intérieur de la zone de rétro-réflexion catadioptrique, ces dernières apparaissant beaucoup plus brillantes.

La présente invention a pour objet de pallier ces inconvénients de la technique antérieure et de proposer une glace de fermeture ou analogue pour un feu ou un bloc de feux de signalisation d'un véhicule automobile qui, tout en présentant un aspect extérieur tout à fait homogène en éclairage ordinaire (diffus), tel que la lumière du jour, possède une région de rétro-réflexion catadioptrique localisée en une partie seulement de la glace.

A cet effet, on prévoit qu'une glace de fermeture ou analogue pour dispositif d'éclairage automobile, du type comportant une première région destinée à remplir une fonction de rétro-réflexion catadioptrique, et une seconde région destinée à assurer une continuité d'aspect avec la première région sans remplir ladite fonction, est caractérisée en ce qu'elle comporte, dans la première région, un ensemble de premières aiguilles formant prismes à réflexion totale, définissant chacune un trièdre trirectangle, pour définir ladite fonction de rétro-réflexion catadioptrique, et en ce qu'elle comporte, dans la seconde région, un ensemble de secondes aiguilles, définissant chacune un trièdre voisin d'un trièdre trirectangle mais suffisamment différent de celui-ci pour ne pas remplir ladite fonction catadioptrique, tout en présentant, en lumière ambiante, un aspect général similaire à celui des premières aiguilles.

Avantageusement, les secondes aiguilles sont obtenues par décalage angulaire d'au moins l'une des faces d'un trièdre trirectangle, et de préférence des trois faces dudit trièdre.

Le décalage angulaire a préférentiellement une valeur comprise entre 2 et 5 degrés.

L'invention sera mieux comprise à la lecture de la description détaillée suivante d'un mode de réalisation préféré de celle-ci, donnée à titre d'exemple et faite en référence au dessin annexé, sur lequel :

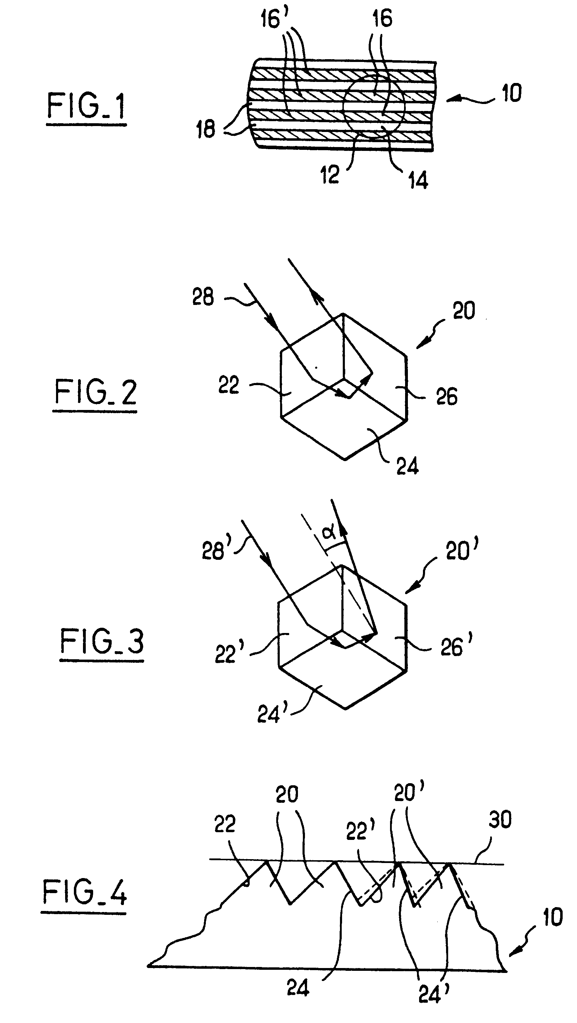

. la figure 1 est une vue de face schématique d'une glace de fermeture d'un bloc de feux de signalisation arrière d'un véhicule automobile ;

4

. la figure 2 est une vue de face d'une aiguille catadioptrique conventionnelle ;

. la figure 3 est une vue de face d'une aiguille catadioptrique modifiée pour permettre la réalisation d'une structure catadioptrique conforme à la présente invention, et

. la figure 4 est une vue de côté partielle et en coupe d'une glace de fermeture comportant des aiguilles catadioptriques conformes aux figures 2 et 3.

En référence à la figure 1, on a représenté une glace de fermeture 10 destinée à fermer l'ensemble des feux de signalisation d'un bloc de feux, prévu par exemple à l'arrière d'un véhicule automobile. On comprend qu'une telle glace présente de la sorte des dimensions relativement importantes.

Par ailleurs, il est conventionnel de conformer ladite glace de manière à ce qu'au moins une partie de celle-ci tienne lieu de surface de rétro-réflexion catadioptrique pour la fonction catadioptrique arrière.

Il est également conventionnel, notamment pour des raisons liées à l'esthétique de la ligne du véhicule, d'organiser les éléments catadioptriques constituant le catadioptre en bandes horizontales parallèles, séparées par des régions transparentes 18 destinées à permettre le passage à travers la glace des diverses fonctions lumineuses des feux de signalisation précités.

Or, certains règlements, en particulier les règlements européens, imposent que chaque catadioptre arrière soit inscrit dans un cercle de 200 mm de diamètre, tel qu'indiqué par exemple en 12 sur la figure 1, soit une zone géométrique 14 sensiblement plus petite que la surface totale de la glace de fermeture.

Cependant, pour les raisons esthétiques mentionnées ci-dessus, on souhaite que les bandes s'étendent sur toute la largeur de la glace de fermeture, en présentant le même aspect extérieur qu'elles soient situées à l'intérieur ou à l'extérieur de la zone limite 14.

Ainsi, selon la présente invention, on ménage sur la surface intérieure de la glace de fermeture, dans le présent exemple selon les parties de bandes horizontales 16 qui sont situées à l'intérieur de la zone réglementaire 14, des premières aiguilles, ayant la forme d'aiguilles catadioptriques élémentaires classiques telles que celle représentée sur la figure 2. Cette aiguille 20 présente la forme d'un trièdre trirectangle, formant prisme à réflexion totale, c'est-à-dire que ses trois faces 22, 24, 26 définissent deux à deux un angle droit, de façon analogue au sommet d'un cube. Ainsi, un rayon lumineux 28 engendré par une source extérieure (par exemple un projecteur d'un autre véhicule) et incident sous un angle quelconque sera réfléchi par l'élément catadioptrique 20 de manière à retourner, parallèlement à sa direction d'incidence, dans sa région d'origine (par exemple vers le conducteur de l'autre véhicule). Cette rétro-réflexion est réalisée par trois réflexions successives du rayon 28, sur chacune des trois faces de l'élément.

Selon la présente invention, on fait appel également à des aiguilles d'un second type, dont l'aspect est généralement similaire à celui des aiguilles catadioptriques conventionnelles décrites ci-dessus ; l'une de ces aiguilles est représentée sur la figure 3 et désignée par la référence 20'. Elle est caractérisée par un sommet également en forme de trièdre, comportant trois faces planes 22', 24' et 26'. Cependant, dans le présent exemple de réalisation, les faces du trièdre définissent deux à deux des angles non strictement égaux à 90 degrés, et éloignés de cette valeur d'un angle différentiel compris par exemple entre 2 et 5°. Ainsi, le rayon lumineux incident 28', quel que soit son angle d'incidence, sera réfléchi par les trois faces 22', 24', 26' du trièdre de telle sorte que le rayon réfléchi ne sera pas parallèle au rayon incident. En particulier, on comprend que l'angle de réflexion sera d'autant plus éloigné de la valeur de 180 degrés (cet éloignement étant matérialisé par l'angle α sur la figure 3) correspondant à la rétro-réflexion que l'écart angulaire des angles des faces par rapport à la valeur de 90 degrés sera important. On supprime de cette manière la fonction de rétro-réflexion catadioptrique de ce second type d'aiguille.

On comprend cependant que ces secondes aiguilles, du fait que la forme de leur trièdre reste tout de même très proche de celle des trièdres trirectangles des aiguilles conventionnelles, auront un aspect général tout à fait similaire à celui de ces dernières, si l'on se place bien entendu dans des conditions d'éclairement ambiant ou diffus, telles que la lumière du jour.

Les aiguilles modifiées 20' telles que décrites ci-dessus seront utilisées pour réaliser les parties de bandes 16' (voir figure 1) qui ne sont pas incluses dans la zone imposée 14.

On réalise de cette manière une glace de fermeture qui possède un aspect régulier et homogène sur toute sa surface, les parties de bandes 16 et 16' se confondant en des bandes uniques couvrant toute la largeur de la glace, mais dont la surface utile de la fonction catadioptrique est ramenée à une région géométrique telle que souhaitée, plus petite que la glace toute entière, dans le présent exemple à la zone circulaire 14.

Sur la figure 4 sont représentées, en coupe, deux aiguilles catadioptriques adjacentes 20 et 20' appartenant respectivement au premier et au second type. Des essais effectués par la Demanderesse ont démontré que le résultat optimal en matière de ressemblance entre ces deux types d'aiguilles était obtenu en disposant les sommets des trièdres respectifs dans un même plan parallèle à la glace 10, symbolisé par la ligne 30, et en effectuant un décalage angulaire, à partir dudit sommet, des faces des trièdres des aiguilles du second type, depuis les traits pointillés vers les traits pleins, comme illustré. Dans cet exemple, l'orientation des faces de ces trièdres a été modifiée de manière à ce qu'elles définissent maintenant deux à deux un angle inférieur à 90 degrés, mais il est bien entendu qu'elles pourront subir un décalage angulaire dans l'autre direction, pour obtenir des angles supérieurs à 90 degrés.

Ainsi, l'invention propose une solution élégante au problème de la réalisation d'un catadioptre sur une partie seulement de la surface d'un élément d'éclairage automobile tel qu'une glace de fermeture de bloc de feux arrière, en conservant à cette glace un aspect régulier et homogène, dans le présent exemple en assurant la continuité sur toute la largeur de la glace des bandes horizontales selon lesquelles les éléments catadioptriques sont organisés.

Bien entendu, l'invention ne se limite pas à la forme de réalisation décrite. En particulier, la suppression de la fonction catadioptrique des aiguilles du deuxième type 20' pourra être réalisée plus simplement en décalant angulairement seulement une face du trièdre de réflexion, car quel que soit l'incidence du rayon lumineux, chacune des trois faces participe à la réflexion, et à fortiori la face dont l'orientation a été modifiée.

Par ailleurs, comme on l'a indiqué plus haut, les écarts angulaires des faces des aiguilles 20' par rapport à celles d'un trièdre trirectangle (aiguille 20) seront choisies de manière à annuler complètement leur fonction catadioptrique, sans toutefois que leur aspect soit excessivement modifié. A titre indicatif, les angles entre les faces seront compris entre 86 et 94 degrés.

En outre, on a décrit une glace de fermeture dans laquelle les régions à fonction catadioptrique sont organisées en bandes horizontales. Il est bien entendu que l'invention s'applique à toute autre disposition, dans laquelle, pour des raisons esthétiques ou autres, l'aspect général d'une glace de fermeture doit être régulier et homogène sur une étendue plus grande que la région dans laquelle est confinée la fonction catadioptrique.

Enfin, on peut noter que la glace selon la présente invention peut être réalisée facilement par un procédé de type connu. Ce procédé consiste à réaliser un moule à partir d'un ensemble d'aiguilles métalliques élémentaires dont le sommet présente, pour un catadioptre conventionnel, la forme d'un trièdre trirectangle. Ces aiguilles sont de section hexagonale, pour être intimement combinées comme on le souhaite. Selon ce procédé, les trois faces des trièdres sont réalisées par trois étapes de meulage selon des directions appropriées sur les aiguilles individuelles.

Ainsi, on comprend qu'il est extrêmement facile de légèrement modifier l'angle d'attaque dans au moins l'une de ces étapes de meulage, pour effectuer un décalage angulaire de la ou des faces correspondantes du trièdre et obtenir les aiguilles métalliques correspondant au second type d'aiguille dans la description qui précède.

Ces aiguilles, conservant la même section, pourront être combinées à souhait avec les aiguilles classiques (à trièdre trirectangle) pour définir une glace de fermeture conforme aux principes de l'invention, qui sera ainsi obtenue d'une manière aussi simple et pas plus onéreuse qu'un catadioptre conventionnel.

## REVENDICATIONS

1. Glace de fermeture ou analogue pour dispositif d'éclairage automobile, comportant une première région destinée à remplir une fonction de rétro-réflexion catadioptrique, et une seconde région destinée à assurer une continuité d'aspect avec la première région sans remplir ladite fonction, caractérisée en ce qu'elle comporte, dans la première région, un ensemble de premières aiguilles (20) formant prismes à réflexion totale, définissant chacune un trièdre trirectangle, pour définir ladite fonction de rétro-réflexion catadioptrique, et en ce qu'elle comporte, dans la seconde région, un ensemble de secondes aiguilles (20'), définissant chacune un trièdre voisin d'un trièdre trirectangle mais suffisamment différent de celui-ci pour ne pas remplir ladite fonction catadioptrique, tout en présentant, en lumière ambiante, un aspect général similaire à celui des premières aiguilles.

2. Glace de fermeture selon la revendication 1, caractérisée en ce que les secondes aiguilles sont obtenues par décalage angulaire d'au moins l'une des faces d'un trièdre trirectangle.

3. Glace de fermeture selon la revendication 2, caractérisée en ce que les secondes aiguilles sont obtenues par décalage angulaire des trois faces d'un trièdre rectangle.

4. Glace de fermeture selon l'une quelconque des revendications 2 et 3, caractérisée en ce que le décalage angulaire a une valeur comprise entre 2 et 5 degrés.

5. Glace de fermeture selon l'une quelconque des revendications 1 à 4, caractérisée en ce que les premières aiguilles sont toutes situées à l'intérieur d'une zone géométrique imposée de la glace de fermeture.

6. Glace de fermeture selon l'une quelconque des revendications 1 à 5, caractérisée en ce que les sommets des trièdres des premières et secondes aiguilles sont contenus dans un même plan parallèle à ladite glace.

7. Glace de fermeture selon l'une quelconque des revendications 1 à 6, caractérisée en ce que les première et seconde régions se complètent pour définir des bandes parallèles.

FIG_1

FIG_2

FIG_3

FIG_4

# 0224415

Numero de la demande

## RAPPORT DE RECHERCHE EUROPEENNE

Office européen
des brevets

EP  86 40 2516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-2 119 992  (JOHNSON)<br><br>* Figures 1-8 *<br><br>--- | 1-3,5,6 | B 60 Q  1/30 |
| X | US-A-1 874 138  (STIMSON)<br>* Figures 1-10 *<br><br>--- | 1,2 | |
| A | US-A-3 541 606  (HEENAN)<br>* Résumé; figures 4-6 *<br><br>--- | 1 | |
| A | DE-C-1 123 928  (METALL INDUSTRIE K.G. HUECK)<br>* Figures 1,2 *<br><br>----- | 1 | |

DOMAINES TECHNIQUES
RECHERCHES (Int Cl.4)

B 60 Q
F 21 M
F 21 V

Le présent rapport de recherche a été établi pour toutes les revendications

| Lieu de la recherche | Date d'achèvement de la recherche | Examinateur |
|---|---|---|
| LA HAYE | 11-02-1987 | ONILLON C.G.A. |